# EUROPÄISCHE PATENTSCHRIFT

(11) **EP 0 546 520 B1**
(45) Veröffentlichungstag und Bekanntmachung des Hinweises auf die Patenterteilung: **13.09.1995**
(21) Anmeldenummer: 92120989.6
(22) Anmeldetag: 09.12.1992
(51) Int. Cl.: B01D 29/09, B01D 33/04

(54) **Vorrichtung zum Reinigen von Kühlmitteln od. dgl. Fluiden**
Apparatus for cleaning cooling-agents or the like fluids
Dispositif pour la purification d'agents de refroidissement ou de fluides pareils

(30) Priorität: 10.12.1991 DE 9115297 U
(43) Veröffentlichungstag der Anmeldung: 16.06.1993
(73) Patentinhaber: FILTERWERK MANN & HUMMEL GMBH, D-71631 Ludwigsburg (DE)
(72) Erfinder: Gebhart, Manfred, W-7750 Konstanz (DE)
(74) Vertreter: Voth, Gerhard, Dipl.-Ing.

(56) Entgegenhaltungen:
- DE-A- 3 822 485
- DE-U- 8 911 023
- DE-U- 9 114 802
- US-A- 4 233 157

## Beschreibung

Die Erfindung betrifft eine Vorrichtung zum Reinigen von Kühlmittel od.dgl. Schmutzpartikel enthaltenden Fluiden mittels eines Filtervlieses, das in verschmutztem Zustand auf einen Haspelkern aufgewickelt wird.

Haspeleinrichtungen zum Aufwickeln verbrauchter Filtervliese sind an sich bekannt. Als Haspelkern wird dabei ein Stück Rundholz eingesetzt. Ist das verbrauchte Filtervlies aufgewickelt, wird das Rundholz mit dem umgebenden Filtervlies als Sondermüll behandelt. Ein solcher Haspelkern, der nicht mehr entfernt werden kann, erhöht unnötigerweise das Gewicht ebenso wie im Filtervlies festsitzende Feuchtigkeit - und damit die Entsorgungskosten des Sondermülls.

In Kenntnis dieses Standes der Technik hat sich der Erfinder das Ziel gesetzt, den geschilderten Problemen mit einer verbesserten Haspeleinrichtung zu begegnen.

Zur Lösung dieser Aufgabe führt die Lehre des Anspruches 1; der Haspelkern ist in einer gesonderten Haspeleinrichtung lösbar vorgesehen, die einen die Transportbewegung des bandartigen Filtervlieses steuernden und eine Aufwickelwelle betätigenden Antrieb aufweist. Als günstig haben sich zudem mehrere Haspelkerne in einer Haspelscheibe erwiesen, die in dieser durch einen Haspeldeckel lösbar festlegbar sind, insbesondere zumindest zwei die Aufwickelwelle flankierende Vierkantrohre als Haspelkerne.

Die erfindungsgemäße Haspeleinrichtung übernimmt also sowohl den Transport als auch die Aufwickelung des verbrauchten Filtervlieses. Das verbrauchte Filtervlies wird auf die beiden Vierkantrohre gewickelt und dabei automatisch gepreßt. Hierbei wird Feuchtigkeit abgeschieden.
Nach Beendigung des Aufwickelvorganges wird das aufgewickelte Band entnommen. Da nach der Entnahme die Führung für die beiden Haspelkerne entfällt, steht das aufgewickelte Filtervlies nicht mehr unter Spannung. Hierdurch können die beiden Haspelkerne ohne weiteres entfernt und für einen nächsten Aufwickelvorgang zur Verfügung gehalten werden.

Nach einem weiteren Merkmal der Erfindung ist die Vorrichtung vom Filtervlies in einem geführten Einlaufwinkel (w) und einem Auslaufwinkel (t) durchfahrbar, wobei sich Einlaufwinkel von 50° bis 60°, bevorzugt etwa 55° und Auslaufwinkel (t) von 30° bis 40°, bevorzugt etwa 45°, als besonders günstig erwiesen haben.

Zur Führung des Filtervlieses sind erfindungsgemäß seitliche Profile als Führungsbahnen vorgesehen, die in den vorstehenden Winkeln zur Horizontalen verlaufen und gegebenenfalls verstellbar angebracht sind. Vorteilhafterweise lagert zwischen dem abwärts geneigten Einlaufabschnitt der Führungsbahn und dem nachfolgend nach oben weisenden Auslaufabschnitt zumindest eine Umlenkwalze.

Im Rahmen der Erfindung nimmt die Haspeleinrichtung das Filtervlies von der Führungsbahn ab, die über einem Vorrichtungsteil mit geringem Unterdruck verläuft; durch diesen wird ein weiterer Trocknungseffekt erzielt. Denn der als Unterdruckkammer wirkende Abströmkanal unter der Filterfläche ist so bemessen, daß ein leichter Sog-Effekt entsteht, der zudem ein Abheben des Filtervlieses von der Filterfläche verhindert.

Den Unteransprüchen sind zusätzliche Ausgestaltungen des Erfindungsgegenstandes zu entnehmen.

Weitere Vorteile, Merkmale und Einzelheiten der Erfindung ergeben sich aus der nachfolgenden Beschreibung eines bevorzugten Ausführungsbeispieles sowie anhand der Zeichnung; diese zeigt in
- Fig. 1:: die Seitenansicht einer Filtervorrichtung;
- Fig. 2:: die Draufsicht auf Fig. 1;
- Fig. 3:: ein vergrößertes Detail aus Fig. 1;
- Fig. 4:: das Detail aus Fig. 3 in veränderter Lage.

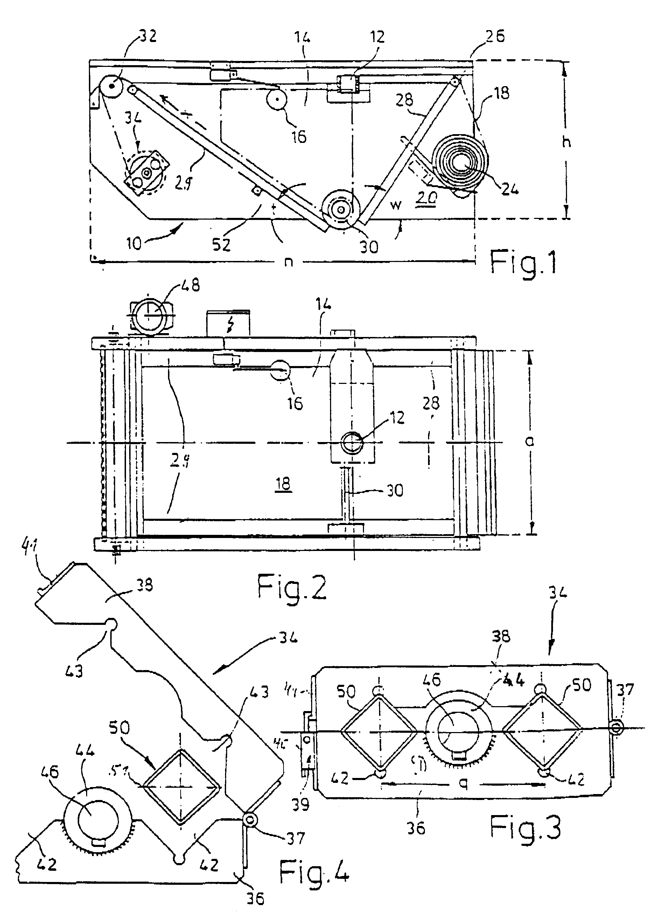

Eine Vorrichtung 10 zum Reinigen von bei 12 zugeführtem Kühlschmiermittel weist gemäß Fig. 1 in einem Filtergehäuse 14 mit Niveauregler 16 ein kontinuierlich oder chargenweise vorrückendes Band 18 aus Filtervlies der Breite a von 540 bis 1.500 mm auf.

Das Filterband 18 läuft in Förderrichtung x zwischen Seitenwänden 20 der Länge n von beispielsweise 1.500 mm und der Höhe h von etwa 600 mm von einer -- in einem Trommelhalter 22 lagernden -- Wickeltrommel 24 über eine obere Umlenkrolle 26 zwischen in einem Einlaufwinkel w von etwa 55° abwärts geneigten Führungsprofilen 28 als Einlaufabschnitt zu einer unteren Umlenkwalze 30 und von dieser -- zwischen in einem Auslaufwinkel t von etwa 35° schrägliegenden Führungsprofilen 29 als Auslaufabschnitt --zu einer oberen Umlenkwalze 32, die über einer das verbrauchte Filterband 18 aufnehmenden Haspeleinrichtung 34 angeordnet ist.

Die Haspeleinrichtung 34 umfaßt gemäß Fig. 3,4 eine untere Haspelscheibe 36 sowie einen mit dieser durch ein Scharnier 37 verbundenen und abklappbaren Haspeldeckel 38, der andernends an der Haspelscheibe 36 durch eine Verschlußgruppe 39 aus einem Schloßteil mit Riegelzunge 40 und einem von dieser hintergreifbaren Hakenteil 41 festgelegt wird. Die Haspelscheibe 36 enthält in mittleren Abstand q zueinander zwei dreiecksförmige Randausnehmungen 42 und zwischen diesen ein Lager 44 einer Aufwickelwelle 46 mit gesondertem Antrieb 48.

Jede der Randausnehmungen 42 nimmt ein Vierkantrohr 50 als Haspelkern auf, das durch Schließen des Haspeldeckels 38 in an diesem vorgesehene Randausnehmungen 43 eingreift und so gehalten wird. Die Vierkantrohre 50 sind so festgelegt, daß jeweils eine Ecke 51 der Rohrquerschnitte auf einem gemeinsamen Druckmesser D der Aufwickelwelle 46 angeordnet sind und zu dieser weisen.

Das mit dem Antrieb 48 transportierte und aufgewickelte Filterband 18 wird auf den Vierkantrohren 50 gepreßt, dabei wird Feuchtigkeit ausgeschieden. Dieser Trocknungseffekt wird durch von Unterdruck erzeugtem Sog unterstützt, der in einem Abströmkanal 52 unter der Filterfläche besteht und dank dessen ein unerwünschtes Anheben der Filterbahn 18 hintangehalten wird.

Nach Gebrauch des Filterbandes 18 wird der Haspeldeckel 38 gemäß Fig. 4 abgeklappt und die entstandene Wickelrolle entfernt; die beiden Vierkantrohre 50 werden herausgezogen und wieder eingesetzt.

## Patentansprüche

1. Vorrichtung zum Reinigen von Kühlmittel oder dergleichen Schmutzpartikel enthaltenden Fluiden mittels eines Filtervlieses, das in verschmutztem Zustand auf einer Haspel aufgewickelt wird, welche in Abhängigkeit von der Transportbewegung des bandartigen Filtervlieses, mit einem die Aufwickelwelle (46) betätigenden Antrieb versehen ist, dadurch gekennzeichnet, daß die Haspel aus wenigstens einem Paar von Haspelkernen besteht, die in einer Haspelscheibe (36) gelagert sind und wobei die Haspelkerne durch einen schließbar angebrachten Haspeldeckel (38) lösbar festlegbar sind.

2. Vorrichtung nach Anspruch 1, gekennzeichnet durch zumindest zwei die Aufwickelwelle (46) flankierende Mehrkantrohre (50) als Haspelkerne.

3. Vorrichtung nach Anspruch 2, dadurch gekennzeichnet, daß jeweils eine Ecke (51) der Rohrquerschnitte zweier Mehrkantrohre (50) auf einem gemeinsamen Durchmesser (D) der Aufwickelwelle (46) vorgesehen ist und zu dieser weist.

4. Vorrichtung nach einem der Ansprüche 1 bis 3, gekennzeichnet durch Mehrkantrohre (50) reckteckigen, bevorzugt quadratischen, Rohrquerschnittes.

5. Vorrichtung nach Anspruch 1 und 4, dadurch gekennzeichnet, daß Haspelscheibe (36) und Haspeldeckel (38) jeweils zwei dreiecksförmige Randausnehmungen (42,43) aufweisen, die viereckige Lagerdurchbrüche für die Mehrkantrohre (50) bilden.

6. Vorrichtung nach wenigstens einem der Ansprüche 1 bis 5, dadurch gekennzeichnet, daß sie eine vom Filtervlies (18) durchfahrbare Führungsbahn (28,29) mit einem Einlaufwinkel (w) und einem Auslaufwinkel (t) aufweist.

7. Vorrichtung nach Anspruch 6, gekennzeichnet durch einen Einlaufwinkel von 50° bis 60°, bevorzugt etwa 55°, für den Einlaufabschnitt der Führungsbahn (28,29) und/oder einen Auslaufwinkel (t) von 30° bis 40°, bevorzugt etwa 45°, für den Auslaufabschnitt.

8. Vorrichtung nach wenigstens einem der Ansprüche 1 bis 7, dadurch gekennzeichnet, daß die Führungsbahn (28,29) für das Filtervlies (18) von Führungsprofilen gebildet ist.

9. Vorrichtung nach wenigstens einem der Ansprüche 1 bis 8, dadurch gekennzeichnet, daß die Führungsprofile (28,29) zwischen Umlenkwalzen (26,30,32) verlaufen.

10. Vorrichtung nach wenigstens einem der Ansprüche 1 bis 9, dadurch gekennzeichnet, daß zwischen dem abwärts geneigten Einlaufabschnitt und dem aufwärts gerichteten Auslaufabschnitt der Führungsprofile (28,29) wenigstens eine der Umlenkwalzen (30) als Tiefstes der Führungsbahn vorgesehen ist.

11. Vorrichtung nach wenigstens einem der Ansprüche 1 bis 10, dadurch gekennzeichnet, daß die Aufwickelwelle (46) unterhalb der das Ende der Führungsbahn (28,29) bestimmenden Umlenkwalze (32) angeordnet ist.

12. Vorrichtung nach wenigstens einem der Ansprüche 1 bis 11, dadurch gekennzeichnet, daß unter der Fläche des in der Führungsbahn (28,29) verlaufenden Filtervlieses (18) wenigstens eine Unterdruckkammer (52) vorgesehen ist.

13. Vorrichtung nach Anspruch 12, dadurch gekennzeichnet, daß die Unterdruckkammer (52) von einem Abströmkanal gebildet ist.

14. Vorrichtung nach Anspruch 12 oder 13, dadurch gekennzeichnet, daß der Abströmkanal (52) unterhalb des Auslaufabschnittes (29) der Führungsbahn vorgesehen ist.

## Claims

1. Apparatus for cleaning fluids, which contain coolants or similar dirt particles, by means of a non-woven filter which is wound on a reel in its dirty state, said reel being provided with a drive means actuating the winding shaft (46) in dependence on the transport movement of the strip-like non-woven filter, characterised in that the reel comprises at least one pair of reel cores, which are mounted in a reel plate (36), and wherein the reel cores are detachably securable by a reel cover (38), which is mounted in a closable manner.

2. Apparatus according to claim 1, characterised by at least two polygonal tubes (50), which flank the winding shaft (46) and serve as reel cores.

3. Apparatus according to claim 2, characterised in that each respective corner (51) of the cross-sections of two polygonal tubes (50) is provided on a common diameter (D) of the winding shaft (46) and is orientated towards said shaft.

4. Apparatus according to one of claims 1 to 3, characterised by polygonal tubes (50) of a rectangular, preferably square, cross-section.

5. Apparatus according to claims 1 and 4, characterised in that reel plate (36) and reel cover (38) each have two triangular edge recesses (42, 43), which form quadrangular bearing openings for the polygonal tubes (50).

6. Apparatus according to at least one of claims 1 to 5, characterised in that it has a guide path (28, 29), which can be travelled by the non-woven filter (18) and has an inlet angle (w) and an outlet angle (t).

7. Apparatus according to claim 6, characterised by an inlet angle of between 50° and 60°, preferably substantially 55°, for the inlet portion of the guide path (28, 29) and/or an outlet angle (t) of between 30° and 40°, preferably substantially 45°, for the outlet portion.

8. Apparatus according to at least one of claims 1 to 7, characterised in that the guide path (28, 29) for the non-woven filter (18) is formed from guide profiles.

9. Apparatus according to at least one of claims 1 to 8, characterised in that the guide profiles (28, 29) extend between guide rollers (26, 30, 32).

10. Apparatus according to at least one of claims 1 to 9, characterised in that at least one of the guide rollers (30) is provided as the lowermost point of the guide path between the downwardly inclined inlet portion and the upwardly orientated outlet portion of the guide profiles (28, 29).

11. Apparatus according to at least one of claims 1 to 10, characterised in that the winding shaft (46) is disposed beneath the guide roller (32) determining the end of the guide path (28, 29).

12. Apparatus according to at least one of claims 1 to 11, characterised in that at least one low-pressure chamber (52) is provided beneath the face of the non-woven filter (18) travelling in the guide path (28, 29).

13. Apparatus according to claim 12, characterised in that the low-pressure chamber (52) is formed by a discharge duct.

14. Apparatus according to claim 12 or 13, characterised in that the discharge duct (52) is provided beneath the outlet portion (29) of the guide path.

## Revendications

1. Dispositif pour purifier des agents de refroidissement, ou des fluides analogues, contenant des particules de déchets, au moyen d'un non-tissé filtrant, qui lorsqu'il est souillé est enroulé sur un treuil, lequel est muni d'un entraînement actionnant l'arbre d'enroulement (46) en fonction du mouvement de transport du non-tissé filtrant sous forme de bande, caractérisé en ce que le treuil est constitué d'au moins une paire de mandrins de treuil, qui sont montés dans un plateau de treuil (36) et dans lequel ils peuvent être fixés de façon amovible par un couvercle de treuil (38) monté de façon à pouvoir être fermé.

2. Dispositif selon la revendication 1, caractérisé en ce qu'il comporte, comme mandrins de treuil, au moins deux tubes polygonaux (50) flanquant l'arbre d'enroulement (46).

3. Dispositif selon la revendication 2, caractérisé en ce que respectivement un coin (51) des sections transversales des deux tubes polygonaux est prévu sur un diamètre commun (D) de l'arbre d'enroulement (46) et est dirigé vers celui-ci.

4. Dispositif selon l'une des revendications 1 à 3, caractérisé par des tubes polygonaux (50) de section transversale rectangulaire, de préférence carrée.

5. Dispositif selon la revendication 1 et la revendication 4, caractérisé en ce que le plateau de treuil (36) et le couvercle de treuil (38) comportent respectivement deux évidements de bordure (42, 43) de forme triangulaire, qui forment des percées quadrangulaires pour les tubes polygonaux (50).

6. Dispositif selon au moins l'une des revendications 1 à 5, caractérisé en ce qu'il comporte une glissière de guidage (28, 29) susceptible d'être parcourue par le non-tissé filtrant (18) avec un angle d'entrée (w) et un angle de sortie (t).

7. Dispositif selon la revendication 6, caractérisé par un angle d'entrée (w) de 50° à 60°, de préférence environ de 55°, pour le tronçon d'entrée de la glissière de guidage (28, 29) et pour un angle de sortie (t) de 30° à 40°, de préférence environ de 45°, pour le tronçon de sortie.

8. Dispositif selon au moins l'une des revendications 1 à 7, caractérisé en ce que la glissière de guidage (28, 29) pour le non-tissé filtrant (18) est formée de profilés de guidage.

9. Dispositif selon au moins l'une des revendications 1 à 8, caractérisé en ce que les profilés de guidage (28, 29) s'étendent entre des rouleaux de renvoi (26, 30, 32).

10. Dispositif selon au moins l'une des revendications 1 à 9, caractérisé en ce que, entre le tronçon d'entrée incliné vers le bas et le tronçon de sortie dirigé vers le haut des profilés de guidage (28, 29), il est prévu au moins un des rouleaux de renvoi (30) en tant que point le plus bas de la glissière de guidage.

11. Dispositif selon au moins l'une des revendications 1 à 10, caractérisé en ce que l'arbre d'enroulement (46) est disposé au-dessous du rouleau de renvoi (32) déterminant la fin de la glissière de guidage (28, 29).

12. Dispositif selon au moins l'une des revendications 1 à 11, caractérisé en ce qu'au-dessous de la surface du non-tissé filtrant (18) s'étendant dans la glissière (28, 29), il est prévu au moins une chambre de dépression (52).

13. Dispositif selon la revendication 12, caractérisé en ce que la chambre de dépression (52) est formée par un canal d'écoulement.

14. Dispositif selon la revendication 12 ou la revendication 13, caractérisé en ce que le canal d'écoulement (52) est prévu au-dessous du tronçon de sortie (29) de la glissière de guidage.
